# EUROPÄISCHE PATENTSCHRIFT

(11) **EP 3 870 993 B1**
(45) Veröffentlichungstag und Bekanntmachung des Hinweises auf die Patenterteilung: **07.01.2026**
(21) Anmeldenummer: 19753052.0
(22) Anmeldetag: 10.08.2019
(51) Int. Cl.: G01S 7/03, H01Q 1/38, H01Q 1/42, H01Q 1/52

(54) **RADARSENSOR**
RADAR SENSOR
CAPTEUR RADAR

(30) Priorität: 25.10.2018 DE 102018218253
(43) Veröffentlichungstag der Anmeldung: 01.09.2021
(73) Patentinhaber: Robert Bosch GmbH, 70442 Stuttgart (DE)
(72) Erfinder: NEZADAL, Martin, 71229 Leonberg (DE); SCHMIDT, Thomas, 71522 Backnang (DE); PIETSCH, Andreas, 74321 Bietigheim-Bissingen (DE); HANSEN, Maik, 71229 Leonberg (DE); MEYER, Johannes, 76275 Ettlingen (DE)
(86) Internationale Anmeldenummer: PCT/EP2019/071517
(87) Internationale Veröffentlichungsnummer: WO 2020/083542

(56) Entgegenhaltungen:
- EP-A1- 1 462 817
- EP-A1- 1 674 882
- EP-A2- 0 884 799
- DE-A1- 102011 122 346
- US-A1- 2016 013 557

## Beschreibung

### Gebiet der Erfindung

Die Erfindung betrifft einen Radarsensor.

### Stand der Technik

Radarsensoren werden dazu eingesetzt, um entfernte Gegenstände zu detektieren. Hierzu werden elektromagnetische Radarwellen in eine vorgegebene Richtung emittiert und an den Gegenständen reflektierte Anteile wieder empfangen und ausgewertet. Beispielsweise können Radarsensoren in Kraftfahrzeugen eingesetzt werden, um Hindernisse oder andere Verkehrsteilnehmer zu detektieren.

Die DE 10 2012 202 913 A1 beschreibt einen Radarsensor. Die US 2016 013 557 A1 beschreibt ein Antennengerät. Die EP 1 462 817 A1 beschreibt ein Millimeterwellenradar und ein Verfahren zu dessen Herstellung. Die EP 0 884 799 A2 beschreibt ein Halbleitermodul mit darin enthaltenem Antennenelement.

### Offenbarung der Erfindung

Vor diesem Hintergrund wird mit dem hier vorgestellten Ansatz ein Radarsensor gemäß dem unabhängigen Anspruch vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, beim Betreiben eines Radarsensors generierte Substratwellen aus einem Antennensubstrat kontrolliert als Koppelwellen auszukoppeln und kontrolliert zu absorbieren. Hierdurch kann eine Funktionsweise des Radarsensors und insbesondere dessen Abstrahlcharakteristik verbessert werden.

Es wird ein Radarsensor mit zumindest einer Antennenstruktur und zumindest einer Koppelstruktur vorgeschlagen, wobei die Koppelstruktur dazu ausgebildet ist, Substratwellen aus einem als Träger für die Antennenstruktur und die Koppelstruktur verwendeten Antennensubstrat auszukoppeln und als Koppelwellen in einen Abstrahlbereich abzustrahlen, wobei der Radarsensor ferner einen in dem Abstrahlbereich angeordneten Absorber zum Absorbieren der Koppelwellen aufweist.

Ideen zu Ausführungsformen der vorliegenden Erfindung können unter anderem als auf den nachfolgend beschriebenen Gedanken und Erkenntnissen beruhend angesehen werden.

Ein Antennensubstrat kann als Leiterplatte bezeichnet werden. Das Antennensubstrat ist elektrisch nicht leitend. Auf dem Antennensubstrat und/oder in das Antennensubstrat können elektrisch leitenden Strukturen, wie Leiterbahnen, Durchkontaktierungen und metallisierte Flächen angeordnet beziehungsweise integriert sein. Ein Anteil der elektrisch leitenden Strukturen kann eine Antennenstruktur ausbilden. Ein anderer Anteil der elektrisch leitenden Strukturen kann eine Koppelstruktur ausbilden. Die Antennenstruktur ist mit einer Steuerungselektronik verbunden. Die Antennenstruktur kann elektromagnetische Wellen abstrahlen, wenn sie von der Steuerungselektronik mit einem elektrischen Hochfrequenzsignal beaufschlagt wird. Die Antennenstruktur kann so als Sendeantenne wirken. Die Antennenstruktur kann eine Richtcharakteristik aufweisen und einen Großteil der ihr durch das Hochfrequenzsignal zugeführten elektrischen Energie in einen definierten Winkelbereich abstrahlen. Ferner kann die Antennenstruktur ein ankommendes elektromagnetisches Signal in einem Hochfrequenzsignal abbilden und so als Empfangsantenne wirken.

Insbesondere können elektrisch leitende Teilbereiche der Oberfläche des Antennensubstrats die Antennenstruktur ausbilden. Ein elektrisch leitendes Material kann auf der Oberfläche angeordnet werden, um die Antennenstruktur auszubilden. Das elektrisch leitende Material kann auf die Oberfläche gedruckt werden. Es können verschiedene Druckverfahren wie Siebdruck, Rollendruck, etc. eingesetzt werden. Alternativ kann das elektrisch leitende Material auf der Oberfläche in anderer Weise abgeschieden werden. Verschiedene Abscheideverfahren wie Abscheiden aus einer Gasphase (z.B. CVD-Verfahren oder PVD-Verfahren) oder aus einer flüssigen Phase (z.B. galvanisches oder stromloses Plattieren) können eingesetzt werden. Vor dem Abscheiden können Flächen, auf denen kein elektrisch leitendes Material abgeschieden werden soll, durch eine Maske maskiert werden. Die Maske kann nach dem Abscheiden wieder entfernt werden. Alternativ kann elektrisch leitendes Material ganzflächig abgeschieden werden und anschließend können nach Aufbringen einer Maske unerwünschte Teilbereiche durch Abätzen wieder entfernt werden. Durch Maskieren und Abscheiden kann die Antennenstruktur mit einer hohen Präzision auf der Oberfläche ausgerichtet werden. Die Teilbereiche können elektrisch leitend miteinander verbunden sein. Die Teilbereiche können unterschiedlich große bzw. starke Antennenstrukturen ausbilden.

Aufgrund von Hochfrequenzeffekten kann ein Teil der von der Steuerungselektronik bereitgestellten elektrischen Energie als Substratwellen von der Antennenstruktur in das Antennensubstrat eingekoppelt werden und sich innerhalb des Antennensubstrats ausbreiten. An Kanten des Antennensubstrats, wie beispielsweise den Rändern, können die Substratwellen unkontrolliert auskoppeln, in eine unkontrollierte Richtung abstrahlen und so Störungen verursachen.

Die Koppelstruktur kann als Fangeinrichtung beziehungsweise Falle für die Substratwellen wirken und die Substratwellen gezielt aus dem Antennensubstrat auskoppeln. Dann wirkt die Koppelstruktur selbst als Antenne und kann ihrerseits elektromagnetische Wellen, die hier als Koppelwellen bezeichnet werden, abstrahlen. Die Koppelstruktur kann die elektromagnetischen Wellen insbesondere in einen Abstrahlbereich emittieren. Dazu kann die Koppelstruktur eine eigene Richtcharakteristik aufweisen. Die Richtcharakteristik der Koppelstruktur kann sich von der Richtcharakteristik der Antennenstruktur wesentlich unterscheiden. Die Richtcharakteristik der Koppelstruktur kann auf den Absorber ausgerichtet sein.

Ein Absorber wandelt absorbierte elektromagnetische Wellen in Wärme um. Der Absorber kann beispielsweise aus einem Kunststoffmaterial mit einem hohen Anteil an elektrisch leitenden Partikeln und/oder Fasern aus Kohlenstoff, beispielsweise Graphit bestehen. Ebenso kann der Absorber aus einem metallischen oder metallisierten Schaum bestehen.

Die Antennenstruktur kann an einer Haupterstreckungsrichtung ausgerichtet sein, um die Richtcharakteristik aufzuweisen. Eine Hauptabstrahlrichtung kann entlang der Haupterstreckungsrichtung neben der Antennenstruktur angeordnet sein. Die Koppelstruktur kann neben der Antennenstruktur angeordnet sein. Mit anderen Worten kann die Koppelstruktur seitlich versetzt zur Antennenstruktur angeordnet sein.

Die Koppelstruktur kann elektrisch von der Antennenstruktur getrennt sein. Die Koppelstruktur kann durch das Antennensubstrat von der Antennenstruktur isoliert sein. Zwischen der Antennenstruktur und der Koppelstruktur kann kein elektrischer Strom fließen. Die Koppelstruktur kann ein passives Element des Radarsensors sein.

Elektrisch leitende Teilbereiche einer Oberfläche des Antennensubstrats können die Koppelstruktur ausbilden. Während der Produktion der Antennenstruktur kann das elektrisch leitende Material für die Koppelstruktur im gleichen Arbeitsschritt auf der Oberfläche angeordnet werden. Das elektrisch leitende Material sowohl für die Antennenstruktur als auch für die Koppelstruktur kann auf die Oberfläche in einem gemeinsamen Arbeitsschritt gedruckt werden. Das elektrisch leitende Material kann auf der Oberfläche in einem gemeinsamen Arbeitsschritt abgeschieden werden. Vor dem Abscheiden können Flächen, auf denen weder für die Antennenstruktur noch für die Koppelstruktur elektrisch leitendes Material abgeschieden werden soll, durch eine Maske maskiert werden. Die Maske kann nach dem Abscheiden wieder entfernt werden. Durch Maskieren und Abscheiden kann die Koppelstruktur mit einer hohen Präzision relativ zur Antennenstruktur ausgerichtet werden. Durch eine Anordnung der Koppelstruktur auf der Oberfläche können entlang der Oberfläche verlaufende Substratwellen besonders gut ausgekoppelt werden.

Die Teilbereiche können elektrisch voneinander getrennt sein. Die Koppelstruktur kann unzusammenhängende Einzelflächen aufweisen. Durch voneinander getrennte Einzelflächen kann eine gegenseitige Beeinflussung der einzelnen Teilbereiche der Koppelstruktur verringert werden.

Die Teilbereiche können in unterschiedlichen Richtungen ausgerichtete Antennenstrukturen ausbilden. Die unterschiedlich ausgerichteten Antennenstrukturen sind in unterschiedlichen Winkeln zu der Haupterstreckungsrichtung der Antennenstruktur ausgerichtet. Durch die unterschiedlichen Winkel weist die Koppelstruktur eine schwächere Richtcharakteristik auf als die Antennenstruktur. Durch die unterschiedlichen Winkel kann die Koppelstruktur Substratwellen aus unterschiedlichen Richtungen aus dem Antennensubstrat auskoppeln.

Gleich ausgerichtete Antennenstrukturen können gruppiert angeordnet sein. Gleich ausgerichtete Antennenstrukturen können in regelmäßigen Abständen angeordnet sein. Durch die planvolle Ausrichtung der Antennenstrukturen können erwartete Frequenzen der Substratwellen besonders gut aus dem Antennensubstrat ausgekoppelt werden.

Der Absorber kann auf einer der Koppelstruktur gegenüberliegenden Oberfläche eines Radoms des Radarsensors angeordnet sein. Ein Radom kann eine Schutzhaube des Radarsensors sein. Das Radom kann transparent für die elektromagnetischen Wellen sein. Der Absorber kann räumlich getrennt von dem Antennensubstrat angeordnet sein. Durch die räumliche Trennung kann der Absorber sicher elektrisch isoliert von der Antennenstruktur sein. Eventuell im Absorber resultierende elektrische Ströme sind so sicher von der Antennenstruktur getrennt. Entstehende Wärme kann über das Radom abgeleitet werden.

Der Absorber kann ferner dazu ausgebildet sein, eine Steuerungselektronik des Radarsensors abzuschirmen. Der Absorber kann im Abstrahlbereich der Koppelstruktur und vor der Steuerelektronik angeordnet sein. So kann ein einzelnes Bauteil beide Funktionen erfüllen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Radarsensors gemäß einem Ausführungsbeispiel; und
Fig. 2 zeigt eine Schnittdarstellung durch einen Radarsensor gemäß einem Ausführungsbeispiel.

Die Figuren sind lediglich schematisch und nicht maßstabsgetreu. Gleiche Bezugszeichen bezeichnen in den Figuren gleiche oder gleichwirkende Merkmale.

Bei Radarsensoren mit Antennen auf einem Hochfrequenz-(HF)-Substrat können je nach Realisierung unerwünschte Leistungs-Anteile auftreten, welche sich im Leiterplattensubstrat ausbreiten, sogenannte Substratwellen. Zum Unterdrücken der Substratwellen können sogenannte High Impedance Structures verwendet werden. Bei der Verwendung von High Impedance Structures ist eine Durchkontaktierung zur Massefläche notwendig. Durch die große Anzahl der Strukturen können zusätzliche Produktionskosten und Fertigungsrisiken entstehen.

Daher werden bei dem hier vorgestellten Ansatz Strukturen verwendet, welche die Leistung der Substratwellen in einen Absorber abstrahlen und keine zusätzlichen Produktionsschritte benötigen.

### Ausführungsformen der Erfindung

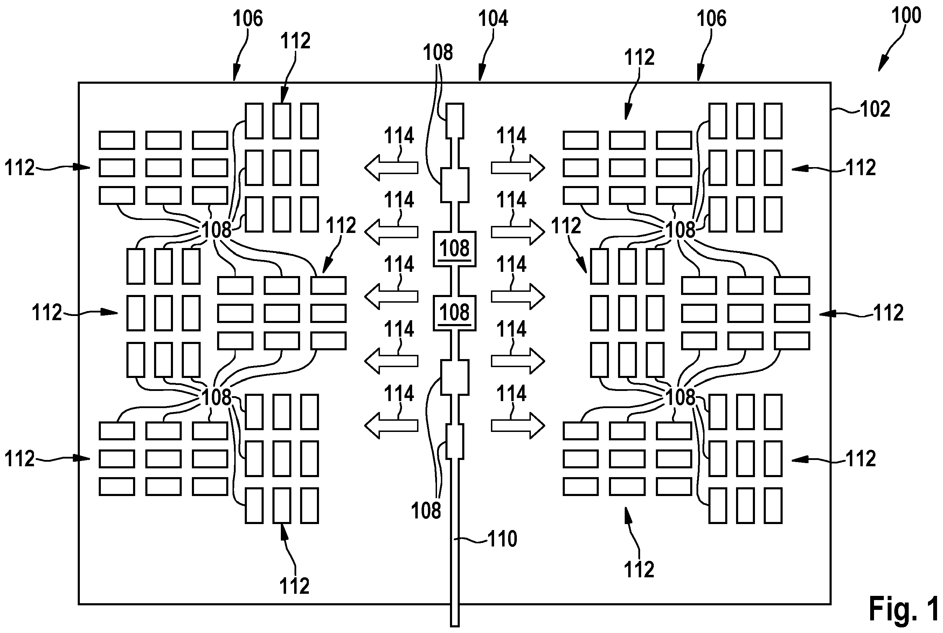

Fig. 1 zeigt eine Darstellung eines Radarsensors 100 gemäß einem Ausführungsbeispiel. Der Radarsensor 100 weist ein Antennensubstrat 102 auf, das als Träger für zumindest eine Antennenstruktur 104 des Radarsensors 100 und zumindest eine Koppelstruktur 106 des Radarsensors 100 dient. Die Antennenstruktur 104 kann als Antennenarray bezeichnet werden. Die Antennenstruktur 104 weist mehrere in einer Reihe nebeneinander angeordnete einzelne Antennenstrukturen 108 auf. Die Reihe ist an einer Hauptrichtung der Antennenstruktur 104 ausgerichtet. Hier ist die Antennenstruktur 104 mit sechs einzelnen Antennenstrukturen 108 dargestellt. Eine Anzahl der einzelnen Antennenstrukturen 108 kann anforderungsgemäß angepasst werden. Die Antennenstrukturen 108 sind untereinander und mit einer Steuerungselektronik des Radarsensors 100 mit einer elektrisch leitenden Leiterbahn 110 des Antennensubstrats 102 verbunden. Die Leiterbahn 110 ist ebenfalls an der Hauptrichtung ausgerichtet. Die Antennenstrukturen 108 sind hier metallisierte Flächen auf einer Oberfläche des Antennensubstrats 102. Die mittleren Antennenstrukturen 108 der Antennenstruktur 104 sind größer als die außen angeordneten Antennenstrukturen 108.

Die Koppelstruktur 106 ist beiderseits der Antennenstruktur 104 angeordnet. Hier besteht die Koppelstruktur 106 aus einer Vielzahl von metallisierten Flächen auf der Oberfläche des Antennensubstrats 102. Die einzelnen Flächen der Koppelstruktur 106 sind elektrisch nicht miteinander oder mit der Antennenstruktur 104 verbunden. Die metallisierten Flächen der Koppelstruktur 106 bilden ebenfalls Antennenstrukturen 108 aus. Die Antennenstrukturen 108 der Koppelstruktur 106 sind unterschiedlich ausgerichtet. Dabei sind jeweils neun gleich ausgerichtete Antennenstrukturen 108 zu einer 3x3 Matrix 112 gruppiert. Die Antennenstrukturen benachbarter Matrizen sind dabei jeweils unterschiedlich ausgerichtet. Hier sind die Antennenstrukturen 108 in zwei Richtungen ausgerichtet. Die eine Hälfte der Antennenstrukturen 108 ist an der Hauptrichtung ausgerichtet. Die andere Hälfte ist quer zu der Hauptrichtung ausgerichtet.

Wenn über die Leiterbahn 110 ein elektrisches Anregungssignal an den Antennenstrukturen 108 der Antennenstruktur 104 angelegt wird, strahlt die Antennenstruktur 104 einen Anteil der bereitgestellten Leistung als elektromagnetische Radarwellen in eine konstruktionsbedingte Abstrahlrichtung ab. Ein anderer Anteil der Leistung wird als Substratwellen 114 in das Antennensubstrat 102 eingekoppelt.

Die Antennenstrukturen 108 der Koppelstruktur 106 koppeln die Substratwellen 114 aus dem Antennensubstrat 102 aus und strahlen ihrerseits Koppelwellen in einen Abstrahlbereich der Koppelstruktur 106 ab.

In dem Abstrahlbereich ist zumindest ein hier nicht dargestellter Absorber angeordnet, der die Koppelwellen absorbiert und in Wärme umwandelt.

Die Antennenstrukturen 104 können beispielsweise mit einer Frequenz von 76 GHz betrieben werden. Dabei entstehen parasitäre Hochfrequenzeffekte. Ein solcher Hochfrequenzeffekt sind Substratwellen 114, die bis zu anderen elektrischen Leitern oder Kanten des Antennensubstrats 102 laufen und von dort abgestrahlt werden.

Die Kanten des Antennensubstrats 102 unterliegen Fertigungstoleranzen, wodurch eine Richtung der Abstrahlung an den Kanten unbestimmt ist. Die unbestimmte Abstrahlung kann ein Antennendiagramm des Radarsensors ändern.

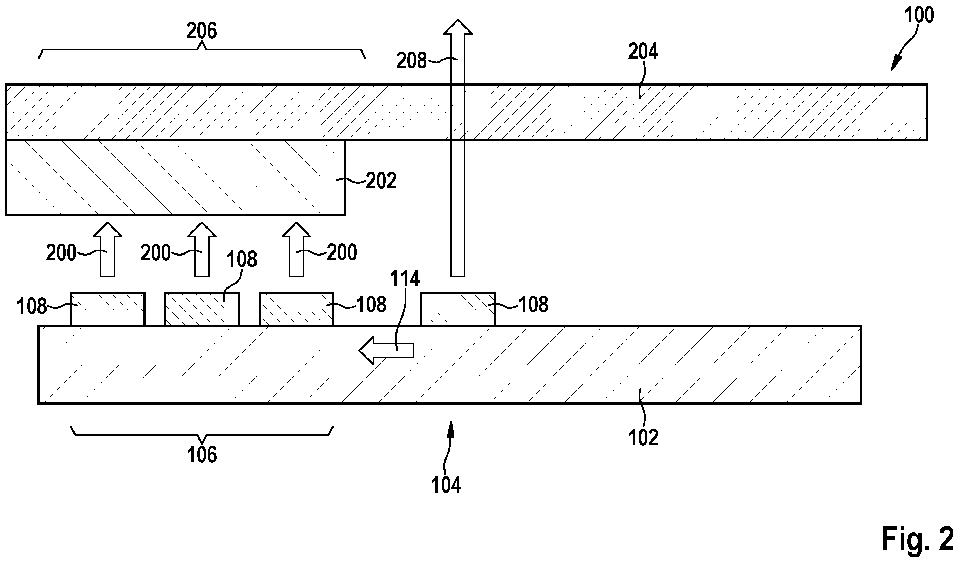

Fig. 2 zeigt eine Schnittdarstellung durch einen Radarsensor 100 gemäß einem Ausführungsbeispiel. Der Radarsensor 100 entspricht dabei im Wesentlichen dem Radarsensor in Fig. 1. Zusätzlich dazu sind hier die Koppelwellen 200, der Absorber 202 und ein Radom 204 des Radarsensors 100 dargestellt. Die Antennenstrukturen 108 der Koppelstruktur 106 koppeln die Substratwellen 114 aus dem Antennensubstrat 102 aus und strahlen die Koppelwellen 200 in den Abstrahlbereich 206 ab. Im Abstrahlbereich 206 ist der Absorber 202 angeordnet. Hier ist der Absorber 202 am Radom 204 angeordnet. Der Absorber ist durch einen Spalt von der Koppelstruktur 106 getrennt und damit elektrisch von den Antennenstrukturen 108 der Koppelstruktur 106 isoliert.

Das Radom 204 ist transparent für die von der Antennenstruktur 104 abgestrahlten Radarwellen 208 und schützt die elektrischen Komponenten des Radarsensors 100 vor Umwelteinflüssen.

Mit anderen Worten werden zum Herstellen auf dem auch als Sensorleiterplatte bezeichneten Antennensubstrat 102 neben den Antennen beziehungsweise um die Antennen zusätzliche Strukturen aufgebracht, welche die ankommenden Substratwellen 114 in Richtung eines darüber liegenden Absorbers 202 überführen beziehungsweise abstrahlen und somit bedämpfen. So wird die Antennencharakteristik möglichst wenig beeinflusst. Zum Herstellen der Strukturen sind keine weiteren Fertigungsschritte im Produktionsprozess notwendig. Der hier vorgestellte Ansatz ist also kostenneutral. Außerdem werden so die Substratwellen 114 aus dem Substrat abgestrahlt, anstatt sie an High Impedance Structures zu reflektieren.

Ein Radarsensor 100 gemäß dem hier vorgestellten Ansatz weist eine Leiterplatte mit einer Sende- und Empfangsantenne in einem Gehäuse mit einem radartransparenten Radom 204 oberhalb der Antennen und einen Absorber 202 im Gehäuse auf. Neben den Antennenstrukturen 104 sind weitere metallische Strukturen angeordnet, welche die von den Antennen im Substrat laufende Leistung in Richtung des Absorbers 202 überführen. Als Strukturen können bevorzugt Patch-Antennen verwendet werden, da diese einfach im Fertigungsprozess der Leiterplatte hergestellt werden können. Die Patch-Antennen können als rechteckige Strukturen neben den Antennen angeordnet werden. Die Strukturen können unter oder knapp neben dem Absorber 202 angeordnet sein, um die abgestrahlten Substratwellen 114 im Absorber 202 zu absorbieren, damit sie die Antennencharakteristik nicht verändern.

Die Koppelstruktur 106 und die Antennenstruktur 104 können metallisch geätzt und/oder abgeschieden werden. Die einzelnen Flächen der Koppelstruktur 106 können beispielsweise eine Länge von vier Millimetern und eine Breite von zwei Millimetern aufweisen. Die Länge ist abhängig von einer Wellenlänge der abgestrahlten Radarwellen 208. Die Länge der einzelnen Fläche kann in einem harmonischen Verhältnis zur Wellenlänge stehen. Beispielsweise kann die Länge ¼ λ oder ein ganzzahliges Vielfaches der Wellenlänge betragen. Die geeignete Länge ist auch abhängig von Abmessungen und/oder Hochfrequenzeigenschaften des Antennensubstrats 102.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Radarsensor (100) mit zumindest einer Antennenstruktur (104) und zumindest einer Koppelstruktur (106), die dazu ausgebildet ist, Substratwellen (114) aus einem als Träger für die Antennenstruktur (104) und die Koppelstruktur (106) verwendeten Antennensubstrat (102) auszukoppeln und als Koppelwellen (200) in einen Abstrahlbereich (206) abzustrahlen, **dadurch gekennzeichnet dass** der Radarsensor (100) ferner einen in dem Abstrahlbereich (206) angeordneten Absorber (202) zum Absorbieren der Koppelwellen (200) aufweist.

2. Radarsensor (100) gemäß Anspruch 1, bei dem die Koppelstruktur (106) neben der Antennenstruktur (104) angeordnet ist.

3. Radarsensor (100) gemäß einem der vorhergehenden Ansprüche, bei dem die Koppelstruktur (106) elektrisch von der Antennenstruktur (104) getrennt ist.

4. Radarsensor (100) gemäß einem der vorhergehenden Ansprüche, bei dem elektrisch leitende Teilbereiche einer Oberfläche des Antennensubstrats (102) die Koppelstruktur (106) ausbilden.

5. Radarsensor (100) gemäß Anspruch 4, bei dem die Teilbereiche elektrisch voneinander getrennt sind.

6. Radarsensor (100) gemäß einem der Ansprüche 4 bis 5, bei dem die Teilbereiche in unterschiedlichen Richtungen ausgerichtete Antennenstrukturen (108) ausbilden.

7. Radarsensor (100) gemäß Anspruch 6, bei dem gleich ausgerichtete Antennenstrukturen (108) gruppiert angeordnet sind.

8. Radarsensor (100) gemäß einem der vorhergehenden Ansprüche, bei dem der Absorber (202) auf einer der Koppelstruktur (106) gegenüberliegenden Oberfläche eines Radoms (204) des Radarsensors (100) angeordnet ist.

9. Radarsensor (100) gemäß einem der vorhergehenden Ansprüche, bei dem der Absorber (202) ferner dazu ausgebildet ist, eine Steuerungselektronik des Radarsensors (100) abzuschirmen.

## Claims

1. Radar sensor (100) having at least one antenna structure (104) and at least one coupling structure (106) designed to couple substrate waves (114) out of an antenna substrate (102) used as a carrier for the antenna structure (104) and the coupling structure (106) and to emit them as coupling waves (200) into an emission region (206), **characterized in that** the radar sensor (100) furthermore comprises an absorber (202) arranged in the emission region (206) and serving for absorbing the coupling waves (200).

2. Radar sensor (100) according to Claim 1, wherein the coupling structure (106) is arranged next to the antenna structure (104).

3. Radar sensor (100) according to either of the preceding claims, wherein the coupling structure (106) is electrically isolated from the antenna structure (104).

4. Radar sensor (100) according to any of the preceding claims, wherein electrically conductive partial regions of a surface of the antenna substrate (102) form the coupling structure (106).

5. Radar sensor (100) according to Claim 4, wherein the partial regions are electrically isolated from one another.

6. Radar sensor (100) according to either of Claims 4 and 5, wherein the partial regions form antenna structures (108) oriented in different directions.

7. Radar sensor (100) according to Claim 6, wherein identically oriented antenna structures (108) are arranged in a grouped fashion.

8. Radar sensor (100) according to any of the preceding claims, wherein the absorber (202) is arranged on a surface of a radome (204) of the radar sensor (100) situated opposite the coupling structure (106).

9. Radar sensor (100) according to any of the preceding claims, wherein the absorber (202) is furthermore designed to shield control electronics of the radar sensor (100).

## Revendications

1. Capteur radar (100) comportant au moins une structure d'antenne (104) et au moins une structure de couplage (106), lequel capteur radar est conçu pour extraire des ondes de substrat (114) d'un substrat d'antenne (102) utilisé comme support pour la structure d'antenne (104) et à la structure de couplage (106) et pour les rayonner en tant qu'ondes de couplage (200) dans une zone de rayonnement (206), **caractérisé en ce que** le capteur radar (100) comporte en outre un absorbeur (202) disposé dans la zone de rayonnement (206) pour absorber les ondes de couplage (200).

2. Capteur radar (100) selon la revendication 1, dans lequel la structure de couplage (106) est agencée à côté de la structure d'antenne (104).

3. Capteur radar (100) selon l'une des revendications précédentes, dans lequel la structure de couplage (106) est électriquement isolée de la structure d'antenne (104).

4. Capteur radar (100) selon l'une des revendications précédentes, dans lequel des sous-régions électriquement conductrices d'une surface du substrat d'antenne (102) forment la structure de couplage (106).

5. Capteur radar (100) selon la revendication 4, dans lequel les sous-régions sont électriquement séparées les unes des autres.

6. Capteur radar (100) selon l'une des revendications 4 à 5, dans lequel les sous-régions forment des structures d'antenne (108) orientées dans des directions différentes.

7. Capteur radar (100) selon la revendication 6, dans lequel des structures d'antenne (108) orientées de manière identique sont agencées de manière groupée.

8. Capteur radar (100) selon l'une des revendications précédentes, dans lequel l'absorbeur (202) est disposé sur une surface, opposée à la structure de couplage (106), d'un radôme (204) du capteur radar (100).

9. Capteur radar (100) selon l'une des revendications précédentes, dans lequel l'absorbeur (202) est en outre conçu pour protéger l'électronique de commande du capteur radar (100).
